# EUROPEAN PATENT APPLICATION

(11) **EP 4 636 200 A1**
(43) Date of publication of application: **22.10.2025**
(21) Application number: 23918429.4
(22) Date of filing: 27.01.2023
(51) Int. Cl.: E04G 23/08, E04H 12/00

(54) **COVER MEMBER AND OFFSHORE STRUCTURE REMOVAL METHOD**

(71) Applicant: Mitsubishi Heavy Industries, Ltd., Tokyo 100-8332 (JP)
(72) Inventor: KANEMASU, Masayuki, Tokyo 100-8332 (JP); SUZUKI, Akihito, Tokyo 100-8332 (JP); HIRATA, Takehiko, Tokyo 100-8332 (JP); SHINDO, Kentaro, Tokyo 100-8332 (JP)
(74) Representative: Studio Torta S.p.A.
(86) International application number: PCT/JP2023/002691
(87) International publication number: WO 2024/157469

(57) **Abstract**

This cover member is to be attached when collapsing an offshore structure comprising a columnar section fixed to the seafloor and extending upward and a heavy section disposed on the upper end of the columnar section. The cover member has a first cover member which has a main surface portion facing water surface when the offshore structure collapses toward the water surface and which at least partially covers the heavy section from outside with a space therebetween.

## Description

### Technical Field

The present disclosure relates to a cover member and an offshore structure removal method.

### Background Art

For example, various structures including a lighthouse, an oil drilling rig, and the like are built on the sea. These offshore structures often have a columnar portion extending from a seabed toward a water surface and a superstructure as a weight portion provided at an upper end of the columnar portion. That is, the offshore structure can be regarded as having a tower shape in which the columnar portion bears a weight of the weight portion.

In a case of removing this type of offshore structure, it is common to adopt a method of cutting the columnar portion from a base and collapsing the columnar portion to a water surface (for example, see PTL 1 to be described below).

### Citation List

### Patent Literature

[PTL 1] Japanese Unexamined Patent Application Publication No. 2007-327301

### Summary of Invention

### Technical Problem

Meanwhile, when the offshore structure is collapsed without taking any measures, for example, a grease content included in the weight portion may leak into the sea, or each member constituting the weight portion may scatter into the sea. As a result, there is a problem in that a load on the environment is increased.

The present disclosure has been made to solve the problems described above, and an object of the present disclosure is to provide a cover member and an offshore structure removal method capable of reducing an environmental load.

### Solution to Problem

In order to solve the problems described above, according to the present disclosure, there is provided a cover member attached to an offshore structure which includes a columnar portion fixed to a seabed and extending upward and a weight portion provided at an upper end of the columnar portion when the offshore structure is collapsed, the cover member including: a first cover member that includes a main surface portion facing a water surface when the offshore structure is collapsed toward the water surface and that covers at least a part of the weight portion.

According to the present disclosure, there is provided an offshore structure removal method of collapsing an offshore structure on which the cover member described above is mounted on a water surface, the method including: a step of mounting the cover member on the offshore structure; a step of cutting a base of a columnar portion; and a step of collapsing the offshore structure from a main surface portion side toward the water surface with the cut base of the columnar portion as a fulcrum.

### Advantageous Effects of Invention

According to the present disclosure, it is possible to provide a cover member and an offshore structure removal method capable of reducing an environmental load.

### Brief Description of Drawings

Fig. 1 is a vertical sectional view illustrating a configuration of an offshore structure and a cover member according to a first embodiment of the present disclosure.
Fig. 2 is a flowchart illustrating each step of an offshore structure removal method according to the first embodiment of the present disclosure.
Fig. 3 is a vertical sectional view illustrating a first modification example of the cover member according to the first embodiment of the present disclosure.
Fig. 4 is a vertical sectional view illustrating a second modification example of the cover member according to the first embodiment of the present disclosure.
Fig. 5 is a vertical sectional view illustrating a third modification example of the cover member according to the first embodiment of the present disclosure.
Fig. 6 is a vertical sectional view illustrating an example in which a cover member is applied to an offshore lighthouse as an offshore structure according to a second embodiment of the present disclosure.
Fig. 7 is a vertical sectional view illustrating an example in which a cover member is applied to an offshore wind turbine as an offshore structure according to a third embodiment of the present disclosure.

### Description of Embodiments

### <First Embodiment>

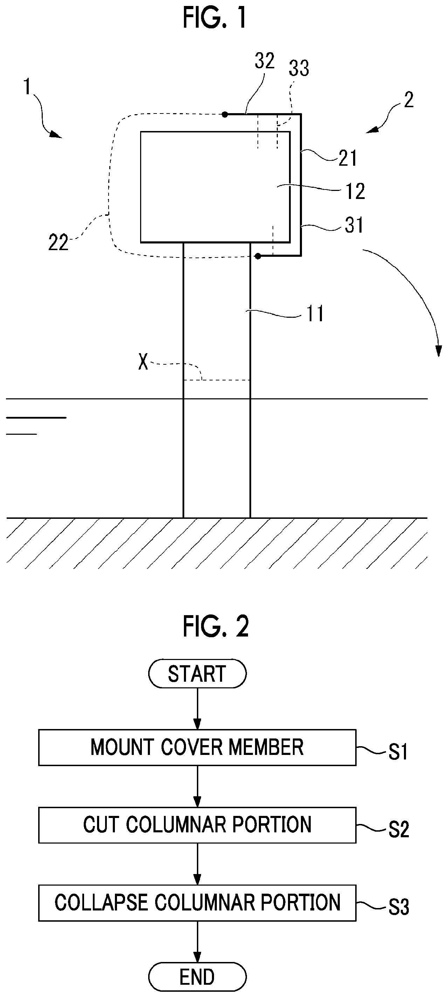

Hereinafter, an offshore structure 1, a cover member 2, and a removal method of the offshore structure 1 by using the cover member 2 according to a first embodiment of the present disclosure will be described with reference to Figs. 1 and 2.

### (Configuration of Offshore Structure)

The offshore structure 1 in the present embodiment refers to a tower-shaped structure built on the ocean, and examples thereof include a lighthouse, an oil field drilling rig, an iron tower, and an offshore wind turbine. In order to schematically illustrate these, the offshore structure 1 will be described as having a columnar portion 11 and a weight portion 12. As illustrated in Fig. 1, a lower end of the columnar portion 11 is fixed to the seabed, and an upper end projects above the water surface. The columnar portion 11 extends in an up-down direction. The weight portion 12 is fixed to the upper end of the columnar portion 11. The weight portion 12 is a member having a weight larger than a weight of the columnar portion 11. In the example in Fig. 1, the columnar portion 11 has a columnar shape extending in the up-down direction, and the weight portion 12 has, for example, a rectangular parallelepiped shape. The shape of the weight portion 12 is not limited to the rectangular parallelepiped shape, and various shapes can be adopted according to a use, a purpose, and a function of the offshore structure 1.

### (Configuration of Cover Member)

The cover member 2 is a member for protecting the offshore structure 1 itself from an impact force at a time of water entry when the offshore structure 1 is collapsed toward the water surface. The cover member 2 includes a first cover member 21 and a sheet member 22 that cover at least a part of the weight portion 12 from an outer side at an interval.

The first cover member 21 has a main surface portion 31 that is a surface facing the water surface side when the offshore structure 1 is collapsed toward the water surface, and a tubular portion 32 that is integrally formed with the main surface portion 31 and that covers the weight portion 12 in the up-down direction and a horizontal direction. That is, the main surface portion 31 faces one side surface of the weight portion 12 with an interval therebetween. The tubular portion 32 extends in the horizontal direction from an end edge of the main surface portion 31. In addition, the tubular portion 32 extends only to a middle position of an extension dimension of the weight portion 12 in the horizontal direction. The weight portion 12 and the tubular portion 32 are integrally formed of a metal such as a steel material or carbon fiber reinforced plastics (CFRP) or glass fiber reinforced plastics (GFRP).

The sheet member 22 is a member that covers a portion on a side opposite to the main surface portion 31 described above. As an example, the sheet member 22 has a bag shape connected to an end edge of the tubular portion 32. As the sheet member 22, for example, a sheet-shaped member formed of a resin or cloth is preferably used. That is, the sheet member 22 can be freely deformed in accordance with a contour shape of the weight portion 12. In addition, it is desirable that the sheet member 22 has performance (waterproofness) of not permeating water.

The first cover member 21 is supported by a support member 33 connected to a structural member (not illustrated) provided inside the weight portion 12. That is, one end of the support member 33 is fixed to the structural member, and the other end is fixed to an inner surface of the first cover member 21. A space formed between the first cover member 21 and the weight portion 12 may be filled with a cushioning material such as a foam resin or rubber.

### (Offshore Structure Removal Method)

Next, a removal method of the offshore structure 1 will be described with reference to Fig. 2. As illustrated in Fig. 2, the removal method includes step S1 of mounting the cover member 2 (first cover member 21), step S2 of cutting the columnar portion 11, and step S3 of collapsing the columnar portion 11.

In step S1, a part of the weight portion 12 is covered from an outer side by the first cover member 21. Specifically, the first cover member 21 is fixed to the weight portion 12 by the support member 33 described above. At this time, it is desirable that a portion to be covered by the first cover member 21 is appropriately selected to be a portion that is relatively strong against an impact when colliding with the water surface. In addition, at this time, the remaining portion of the weight portion 12 is covered by the sheet member 22 described above. Subsequently, in step S2, the columnar portion 11 is cut along a cutting surface X in the vicinity of a base of the columnar portion 11 (on the water surface or below the water surface). Thereafter, in step S3, the columnar portion 11 and the weight portion 12 are collapsed such that the main surface portion 31 described above faces the water surface side. Finally, the offshore structure 1 after the collapse is towed to the land by a towing ship or the like. Alternatively, the offshore structure 1 is mounted on a ship and transported to the land. As described above, all steps related to the removal method of the offshore structure 1 are completed.

### (Actions and Effects)

Here, in a case of removing the offshore structure 1, it is common to adopt a method of simply collapsing the offshore structure 1 on the water surface by cutting the columnar portion 11 from a base. Meanwhile, when the offshore structure 1 is collapsed without taking any measures, for example, the weight portion 12 is damaged by an impact, and a grease content included in the weight portion 12 may leak into the sea, or each member constituting the weight portion 12 may scatter into the sea. As a result, there is a problem in that a load on the marine environment is increased. Therefore, in the present embodiment, the cover member 2 described above is used.

According to the configuration described above, at least a part of the weight portion 12 is covered with the first cover member 21 having the main surface portion 31. In this manner, when the weight portion 12 collides with the water surface from the main surface portion 31 side when the offshore structure 1 is collapsed, the first cover member 21 comes into contact with the water first, so that an impact on the weight portion 12 is mitigated. In particular, a gap is formed between the first cover member 21 and the weight portion 12. In this manner, the impact force at the time of water landing is less likely to be directly transmitted to the weight portion 12 itself. Therefore, a probability of damage occurrence in the weight portion 12 is reduced, and a possibility that the large or small components constituting the weight portion 12 may scatter into the sea or that a pollutant such as a grease content inside may leak into the sea can be reduced. Therefore, it is possible to remove the offshore structure 1 without giving a load to the marine environment.

Further, according to the configuration described above, since a surface of the cover member 2 opposite to the main surface portion 31 is open, the amount of material required for manufacturing the cover member 2 is reduced. Therefore, it is possible to reduce a manufacturing cost by the amount of material required for an opening. As a result, a cost required for the removal of the offshore structure 1 can be reduced. Further, since the opening is covered with the sheet member 22, it is also possible to reduce a risk that seawater may enter the cover member 2 through the opening after the offshore structure 1 is collapsed. That is, since the weight portion 12 is in a state of being sealed by the cover member 2 and the sheet member 22, it is possible to prevent seawater from entering the inside and oil or a grease content from leaking to the outside. In this manner, it is possible to further reduce a possibility of marine pollution.

In addition, according to the removal method described above, since at least a part of the offshore structure 1 is covered with the cover member 2, when the offshore structure 1 is collapsed, the impact is mitigated by the cover member 2 when the weight portion 12 collides with the water surface from the main surface portion 31 side. In this manner, it is possible to reduce a possibility that the component of the weight portion 12 may scatter into the sea or pollutants such as a grease content inside may leak into the sea. In addition, in this manner, it is not necessary to lay an oil fence or the like around the offshore structure 1 before and after the removal, and thus the offshore structure 1 can be easily and inexpensively removed.

The first embodiment of the present disclosure has been described above. Various changes or improvements can be made to the configuration and the method described above without departing from the concept of the present disclosure.

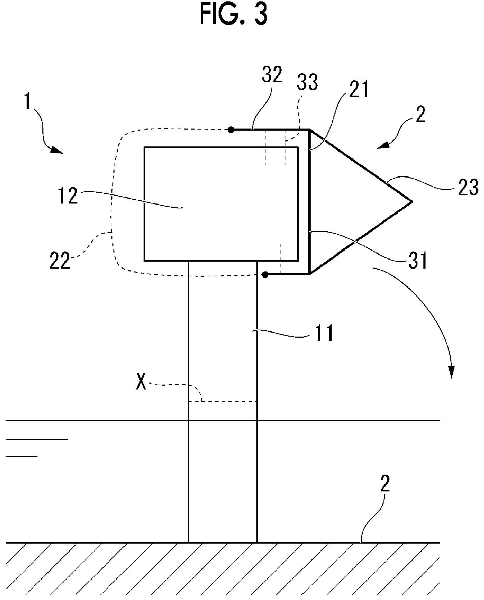

As illustrated in Fig. 3, in a first modification example, a configuration in which the cover member 2 further includes a cone member 23 in addition to the first cover member 21 can be also adopted. The cone member 23 is integrally provided on the main surface portion 31 of the first cover member 21, and projects in a normal direction from the main surface portion 31. The normal direction referred to here is a direction perpendicular to an outer surface of the main surface portion 31, and when the main surface portion 31 is curved, the normal direction coincides with a direction in which the offshore structure 1 enters the water surface when the offshore structure 1 is collapsed. When viewed in the normal direction, a cross-sectional area of the cone member 23 is gradually decreased as a distance from the main surface portion 31 is increased. That is, the cone member 23 has a pointed shape. According to this configuration, since the cone member 23 in a pointed shape is provided on the main surface portion 31 side, when the cone member 23 enters the water surface, an entry speed can be gradually reduced. That is, after a tip of the cone member 23 comes into contact with water, a cross-sectional area of a portion that is submerged in water is gradually increased, so that a resistance of water is gradually increased and the entry speed is gradually reduced. In this manner, the impact of the water landing transmitted to the weight portion 12 side is mitigated, and the weight portion 12 can be more stably protected.

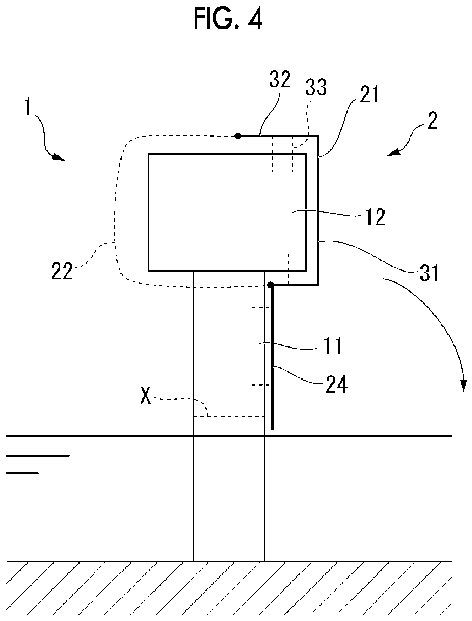

In addition, as a second modification example, as illustrated in Fig. 4, it is also possible to adopt a configuration in which the cover member 2 further includes a second cover member 24, in addition to the first cover member 21. The second cover member 24 covers a part of the columnar portion 11 from an outer side, instead of the weight portion 12. That is, the second cover member 24 has a semi-cylindrical shape in accordance with a cross-sectional shape of the columnar portion 11. A gap may be formed between the second cover member 24 and the columnar portion 11, or the second cover member 24 and the columnar portion 11 may be in close contact with each other. In a case where the gap is formed, the gap may be filled with a cushioning material, in the same manner as the first cover member 21. According to this configuration, since the columnar portion 11 is covered with the second cover member 24, it is possible to avoid a damage to the columnar portion 11 due to an impact at a time of the collision with the water surface when the offshore structure 1 is collapsed. In this manner, since an original form of the columnar portion 11 is maintained as much as possible, a possibility of floating matter being generated in the sea can be reduced.

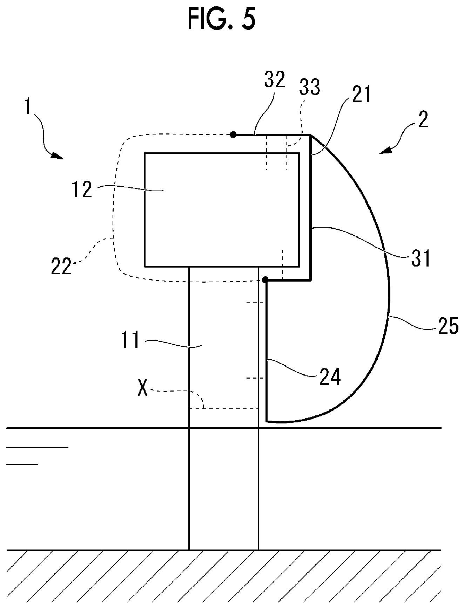

Further, as a third modification example, as illustrated in Fig. 5, a configuration in which the cover member 2 further includes an expanded member 25 in addition to the first cover member 21 and the second cover member 24 can also be adopted. The expanded member 25 extends from an upper end of the first cover member 21 to a lower end of the second cover member 24. The expanded member 25 projects in a curved surface shape to be convex from the main surface portion 31 side of the first cover member 21, thereby forming a space between the first cover member 21 and the second cover member 24. Further, it is desirable that a radius of a curvature of the expanded member 25 is decreased downward and increased upward. According to this configuration, when the offshore structure 1 is collapsed, the collapse progresses after the expanded member 25 first comes into contact with the water surface and rolls on the water surface. In particular, in a case where the radius of the curvature of the expanded member 25 is set as described above, in an initial stage of the collapse, the expanded member 25 is likely to immediately fall to roll in a collapse direction based on a small radius of the curvature. Therefore, a possibility of damage occurrence in the offshore structure 1 itself due to the impact being transmitted to the offshore structure 1 is significantly reduced. Further, since a space is formed between the expanded member 25 and the cover member 2, a large buoyancy is generated, and the offshore structure 1 after the collapse can stably float on the water surface. Therefore, it is possible to more smoothly proceed with subsequent towing work or the like. As a result, it is possible to realize efficiency of the removal work and cost reduction.

### <Second Embodiment>

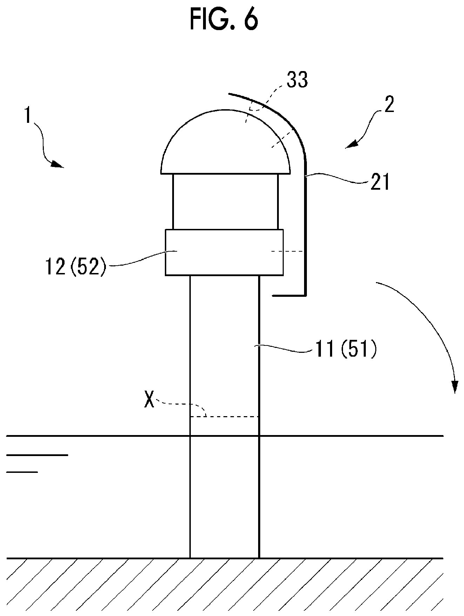

Next, a second embodiment of the present disclosure will be described with reference to Fig. 6. The same configurations as in the first embodiment described above are denoted by the same reference numerals, and detailed descriptions thereof will not be repeated.

As illustrated in Fig. 6, in the present embodiment, the cover member 2 described above is applied to a lighthouse 50 on the sea as a specific example of the offshore structure 1. The lighthouse 50 has a base portion 51 as the columnar portion 11, and a lighthouse main body portion 52 as the weight portion 12 provided at an upper end of the base portion 51. A light source such as a searchlight is disposed inside the lighthouse main body portion 52. The base portion 51 is fixed to the seabed.

In the example in Fig. 6, an example in which the first cover member 21 is attached to the lighthouse main body portion 52 is illustrated. According to this configuration, the lighthouse 50 can stably collapse under a low environmental load with the same actions and effects as those described in the first embodiment by cutting the base portion 51 in the vicinity of a base.

The second embodiment of the present disclosure has been described above. Various changes or improvements can be made to the configuration described above without departing from the concept of the present disclosure. For example, it is also possible to appropriately combine the sheet member 22, the second cover member 24, the cone member 23, and the expanded member 25 described above in the first embodiment or each modification example and apply the resultant to the lighthouse 50 of the present embodiment.

### <Third Embodiment>

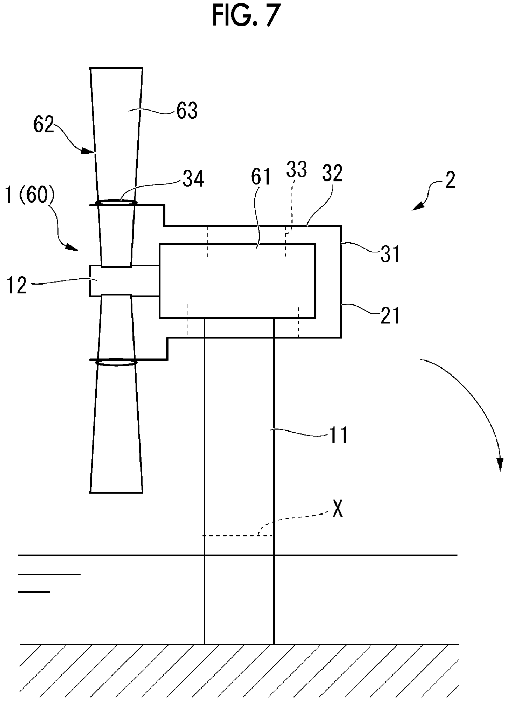

Next, a third embodiment of the present disclosure will be described with reference to Fig. 7. In addition, the same configurations as those in each of the embodiments described above are denoted by the same reference numerals, and detailed description thereof will not be repeated.

As illustrated in Fig. 7, in the present embodiment, the cover member 2 described above is applied to a wind turbine 60 on the sea as a specific example of the offshore structure 1. The wind turbine 60 has the columnar portion 11, a nacelle 61 fixed to an upper portion of the columnar portion 11, and a propeller 62 fixed to an end portion of a shaft extending from the nacelle 61. The propeller 62 has a plurality of blades 63 that extend in a radial direction from the shaft, and are arranged at intervals in a circumferential direction. The nacelle 61 and the propeller 62 constitute the weight portion 12.

In the example in Fig. 7, an example in which the first cover member 21 is attached to the nacelle 61 is illustrated. In addition, a hole 34 through which each of the blades 63 is inserted is formed at an end edge (end edge of the tubular portion 32) of the first cover member 21 on a side opposite to the main surface portion 31. It is desirable that a seal member (not illustrated) is provided between an inner peripheral surface of the hole 34 and a surface of the blade 63. According to this configuration, the wind turbine 60 can stably collapse under a low environmental load with the same actions and effects as those described in the first embodiment by cutting the columnar portion 11 in the vicinity of a base.

The third embodiment of the present disclosure has been described above. Various changes or improvements can be made to the configuration described above without departing from the concept of the present disclosure. For example, it is also possible to appropriately combine the sheet member 22, the second cover member 24, the cone member 23, and the expanded member 25 described above in the first embodiment or each modification example and apply the resultant to the lighthouse 50 of the present embodiment. In addition, it is also possible to adopt a configuration in which the first cover member 21 covers not only the nacelle 61 but also the blade 63.

### <Additional Notes>

The cover member 2 and the removal method of the offshore structure 1 described in each embodiment are understood as follows, for example.

(1) According to a first aspect, there is provided a cover member 2 attached to an offshore structure 1 which includes a columnar portion 11 fixed to a seabed and extending upward and a weight portion 12 provided at an upper end of the columnar portion 11 when the offshore structure 1 is collapsed, the cover member 2 including: a first cover member 21 that includes a main surface portion 31 facing a water surface when the offshore structure 1 is collapsed toward the water surface and that covers at least a part of the weight portion 12 from an outer side at an interval.

With the configuration described above, at least a part of the weight portion 12 is covered with the first cover member 21 having the main surface portion 31. Therefore, when the offshore structure 1 is collapsed, an impact is mitigated by the first cover member 21 when the weight portion 12 collides with the water surface from the main surface portion 31 side. In this manner, it is possible to reduce a possibility that the component of the weight portion 12 may scatter into the sea or pollutants such as a grease content inside may leak into the sea.

(2) According to a second aspect, the cover member 2 according to (1), further includes: a second cover member 24 that covers the columnar portion 11.

With the configuration described above, since the columnar portion 11 is covered with the second cover member 24, it is possible to avoid a damage to the columnar portion 11 when the offshore structure 1 is collapsed. In this manner, it is possible to reduce a possibility of floating matters being generated in the sea.

(3) According to a third aspect, in the cover member 2 according to (1) or (2), the first cover member 21 includes a first cover member 21 body including the main surface portion 31, and a cone member 23 which projects from the main surface portion 31 and of which a cross-sectional area is gradually decreased as a distance from the main surface portion 31 is increased, when viewed in a normal direction of the main surface portion 31.

With the configuration described above, since the cone member 23 is provided on the main surface portion 31 side, when the cone member 23 enters the water surface, an entry speed can be gradually reduced. In this manner, the impact of the water landing transmitted to the weight portion 12 side is mitigated, and the weight portion 12 can be stably protected.

(4) According to a fourth aspect, the cover member 2 according to any one of (1) to (3), further includes: a sheet-shaped member that covers an opening formed at a surface facing a side opposite to the main surface portion 31.

With the configuration described above, since the surface of the cover member 2 opposite to the main surface portion 31 is open, the amount of material required for manufacturing the cover member 2 can be reduced, and a manufacturing cost can be significantly reduced. Further, since the opening is covered with the sheet member 22, it is also possible to reduce a risk that seawater may enter the cover member 2 through the opening after the offshore structure 1 is collapsed.

(5) According to a fifth aspect, the cover member 2 according to (2), further includes: an expanded member 25 that extends from an upper end of the first cover member 21 to a lower end of the second cover member 24 and projects in a curved surface shape to be convex from a main surface portion 31 side to form a space between the first cover member 21 and the second cover member 24.

With this configuration described above, when the offshore structure 1 is collapsed, the collapse progresses after the expanded member 25 first comes into contact with the water surface and rolls on the water surface. Therefore, a possibility of damage occurrence in the offshore structure 1 itself due to the impact being transmitted to the offshore structure 1 is significantly reduced. Further, since a space is formed between the expanded member 25 and the cover member 2, a large buoyancy is generated, and the offshore structure 1 after the collapse can stably float on the water surface.

(6) According to a sixth aspect, there is provided a removal method of an offshore structure 1 of collapsing the offshore structure 1 on which the cover member 2 according to any one of (1) to (5) is mounted on a water surface, the method including: a step of mounting the cover member 2 on the offshore structure 1; a step of cutting a base of a columnar portion 11; and a step of collapsing the offshore structure 1 from a main surface portion 31 side toward the water surface with the cut base of the columnar portion 11 as a fulcrum.

With the method described above, since at least a part of the offshore structure 1 is covered with the cover member 2, when the offshore structure 1 is collapsed, the impact is mitigated by the cover member 2 when the weight portion 12 collides with the water surface from the main surface portion 31 side. In this manner, it is possible to reduce a possibility that the component of the weight portion 12 may scatter into the sea or pollutants such as a grease content inside may leak into the sea.

### Industrial Applicability

In the cover member 2 and the removal method of the offshore structure 1 described above, at least a part of the offshore structure 1 is covered with the cover member 2. Therefore, it is possible to avoid a damage to the offshore structure 1 when the offshore structure 1 is collapsed on the water surface and to reduce environmental load.

### Reference Signs List

1: offshore structure
2: cover member
11: columnar portion
12: weight portion
21: first cover member
22: sheet member
23: cone member
24: second cover member
25: expanded member
31: main surface portion
32: tubular portion
33: support member
34: hole
50: lighthouse
51: base portion
52: lighthouse main body portion
60: wind turbine
61: nacelle
62: propeller
63: blade
X: cutting surface

## Claims

1. A cover member attached to an offshore structure which includes a columnar portion fixed to a seabed and extending upward and a weight portion provided at an upper end of the columnar portion when the offshore structure is collapsed, the cover member comprising:
a first cover member that includes a main surface portion facing a water surface when the offshore structure is collapsed toward the water surface and that covers at least a part of the weight portion from an outer side at an interval.

2. The cover member according to Claim 1, further comprising:
a second cover member that covers the columnar portion.

3. The cover member according to Claim 1 or 2,
wherein the first cover member includes
a first cover member body including the main surface portion, and
a cone member which projects from the main surface portion and of which a cross-sectional area is gradually decreased as a distance from the main surface portion is increased, when viewed in a normal direction of the main surface portion.

4. The cover member according to Claim 1, further comprising:
a sheet-shaped member that covers an opening formed at a surface facing a side opposite to the main surface portion.

5. The cover member according to Claim 2, further comprising:
an expanded member that extends from an upper end of the first cover member to a lower end of the second cover member and projects in a curved surface shape to be convex from a main surface portion side to form a space between the first cover member and the second cover member.

6. An offshore structure removal method of collapsing an offshore structure on which the cover member according to Claim 1 is mounted on a water surface, the method comprising:
a step of mounting the cover member on the offshore structure;
a step of cutting a base of a columnar portion; and
a step of collapsing the offshore structure from a main surface portion side toward the water surface with the cut base of the columnar portion as a fulcrum.
